# EUROPEAN PATENT APPLICATION

(11) **EP 2 031 870 A2**
(43) Date of publication of application: **04.03.2009**
(21) Application number: 08153640.1
(22) Date of filing: 28.03.2008
(51) Int. Cl.: H04N 5/44

(54) **Apparatus and method for switching RF signal in hybrid switching scheme and broadcast receiving apparatus using the same**

(30) Priority: 31.08.2007 KR 20070088567
(71) Applicant: SAMSUNG ELECTRONICS CO., LTD., Suwon-si, Gyeonggi-do 442-742 (KR)
(72) Inventor: Choi, Young-ho, 506-806 Sindong-a, Daewon Apt., Gyeonggi-do (KR)
(74) Representative: Clark, David James

(57) **Abstract**

A switch apparatus using a hybrid switch scheme, a switching method, and a broadcast receiving apparatus using the same are provided. The switch apparatus switches between passing and cutting off a first broadcast signal received through a first communication medium, switches between passing and cutting off a second broadcast signal received through a second communication medium, and performs switching to selectively output one of the passed first broadcast signal and the passed second broadcast signal. Accordingly, a plurality of switch elements (710-730) are arranged on the path for transmitting a broadcast signal in a hybrid scheme, so the broadcast signal is efficiently prevented from being leaked twofold or threefold, and thus isolation increases.

## Description

### BACKGROUND OF THE INVENTION

### 1. Field of the Invention

Apparatuses and methods consistent with the present invention relate to a switch apparatus, a switching method, and a broadcast receiving apparatus using the same, and more particularly, to a switch apparatus which switches a radio frequency (RF) signal to a desired path, a switching method, and a broadcast receiving apparatus using the same.

### 2. Description of the Related Art

Digital televisions are one kind of broadcast receiving apparatus for receiving broadcasts and providing the broadcasts to users. As broadcast technology develops, diverse kinds of broadcast services are being introduced, and many kinds of broadcasts are received by digital televisions.

In addition, as digital television technology develops, it has become possible for a single television to receive many kinds of broadcasts, including terrestrial broadcasts and cable broadcasts. However, since there is only one display in the digital television, the digital television selectively receives only one of the many kinds of broadcasts available at one time.

In order to selectively receive only one kind of broadcast, the digital television has a switch element, the most widely used kind of which is an RF switch integrated circuit (IC).

However, broadcast signals are RF signals, so even if an RF switch IC is used, undesirable effects may result from a leakage of broadcast signals. For example, if terrestrial broadcast signals are leaked to a cable broadcast input terminal through the RF switch IC, terrestrial broadcast signals are leaked to digital televisions in other households connected via a cable, so other households may not be able to view cable broadcasts normally.

If a mechanical relay switch is used instead of the RF switch IC, such a leakage problem can be resolved. However, the mechanical relay switch has the shortcomings that it has a large volume and high costs.

### SUMMARY OF THE INVENTION

Exemplary embodiments of the present invention aim to address at least the above problems and disadvantages and/or other disadvantages not described above.

According to an exemplary aspect of the present invention, there is provided a switch apparatus, including: a first switch unit which switches between passing and cutting off a first broadcast signal received through a first communication medium; a second switch unit which switches between passing and cutting off a second broadcast signal received through a second communication medium; a third switch unit which performs switching to selectively output one of the first broadcast signal passed from the first switch unit and the second broadcast signal passed from the second switch unit; and a switch control unit which controls the switching operation of the first switch unit, the second switch unit, and the third switch unit according to an input control signal.

If the control signal is a signal to select the first broadcast signal, the switch control unit may operate the first switch unit and the third switch unit to output the first broadcast signal, and operate the second switch unit to cut off the second broadcast signal, and if the control signal is a signal to select the second broadcast signal, the switch control unit may operate the second switch unit and the third switch unit to output the second broadcast signal, and operate the first switch unit to cut off the first broadcast signal.

If power is not supplied, the switch control unit may operate the first switch unit to cut off the first broadcast signal, and operate the second switch unit to cut off the second broadcast signal.

The first switch unit may ground the cut-off first broadcast signal, and the second switch unit may ground the cut-off second broadcast signal.

If power is not supplied, the switch control unit may ground an output end of the first switch unit, and ground an output end of the second switch unit.

If power is not supplied, the switch control unit may operate the third switch unit to perform switching to cut off the first broadcast signal and the second broadcast signal.

The first switch unit may include a first diode which switches between passing and cutting off the first broadcast signal under the control of the switch control unit, and the second switch unit may include a second diode which switches between passing and cutting off the second broadcast signal under the control of the switch control unit.

The first broadcast signal may be input to a cathode end (n-type part) of the first diode, and the second broadcast signal may be input to a cathode end (n-type part) of the second diode.

The first diode and the second diode may be positive intrinsic negative (PIN) diodes.

The third switch unit may include a radio frequency (RF) switch integrated circuit (IC).

The first communication medium is suitably air, and the second communication medium is suitably a cable.

According to another exemplary aspect of the present invention, there is provided a switching method including: switching between passing and cutting off a first broadcast signal received through a first communication medium; switching between passing and cutting off a second broadcast signal received through a second communication medium; and switching to selectively output one of the first broadcast signal and the second broadcast signal.

According to another exemplary aspect of the present invention, there is provided a broadcast receiving apparatus, including: a switch unit which performs switching to selectively output one of a plurality of broadcast signals received through a plurality of broadcast media; a tuner which tunes to one of a plurality of channels included in the broadcast signal output from the switch unit; a broadcast processing unit which processes the channel tuned by the tuner; and a broadcast output unit which outputs the channel processed by the broadcast processing unit, wherein the switch unit includes: a first switch unit which switches between passing and cutting off a first broadcast signal received through a first communication medium; a second switch unit which switches between passing and cutting off a second broadcast signal received through a second communication medium; a third switch unit which performs switching to selectively output one of the first broadcast signal passing through the first switch unit and the second broadcast signal passing through the second switch; and a switch control unit which controls the switching operation of the first switch unit, the second switch unit, and the third switch unit according to an input control signal.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram of a switch apparatus according to an exemplary embodiment of the present invention;
FIG. 2 is a flow chart of a switch method of the switch apparatus of FIG. 1 according to an exemplary embodiment of the present invention;
FIG. 3 is a circuit diagram of the switch apparatus of FIG. 1 according to an exemplary embodiment of the present invention;
FIGs. 4A to 5B are graphs to describe isolation according to an exemplary embodiment of the present invention;
FIG. 6 is a block diagram of a broadcast receiving apparatus according to a second exemplary embodiment of the present invention;
FIG. 7 is a block diagram of a switch apparatus according to a third exemplary embodiment of the present invention; and
FIG. 8 is a flow chart of a switch method according to a fourth exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

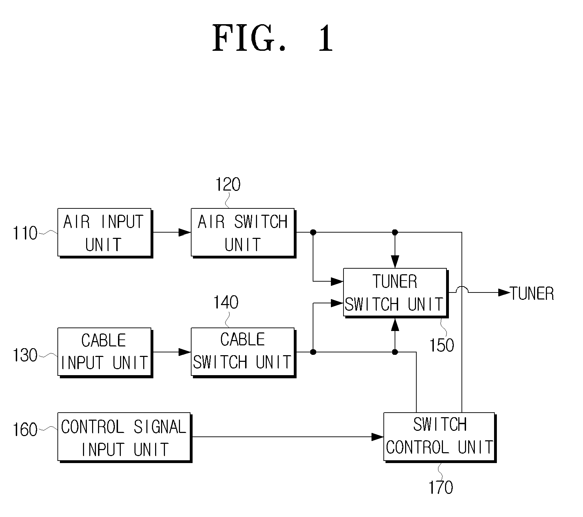

FIG. 1 is a block diagram of a switch apparatus according to an exemplary embodiment of the present invention. The switch apparatus of FIG. 1 switches only one of received broadcast signals to a tuner. The switch apparatus according to an exemplary embodiment of the present invention includes an air input unit 110, an air switch unit 120, a cable input unit 130, a cable switch unit 140, a tuner switch unit 150, a control signal input unit 160, and a switch control unit 170.

The air input unit 110 receives a terrestrial broadcast signal via the air, and transmits the terrestrial broadcast signal to the air switch unit 120.

The air switch unit 120 switches between passing the terrestrial broadcast signal received from the air input unit 110 to the tuner switch unit 150 and cutting off the terrestrial broadcast signal. The air switch unit 120 is controlled by the switch control unit 170.

The cable input unit 130 receives a cable broadcast signal via a cable, and transmits the cable broadcast signal to the cable switch unit 140.

The cable switch unit 140 switches between passing the cable broadcast signal received from the cable input unit 130 to the tuner switch unit 150 and cutting off the cable broadcast signal. The cable switch unit 140 is controlled by the switch control unit 170.

The tuner switch unit 150 selectively switches between outputting the terrestrial broadcast signal passed from the air switch unit 120 and outputting the cable broadcast signal passed from the cable switch unit 140. The tuner switch unit 150 is controlled by the switch control unit 170.

The control signal input unit 160 receives a control signal from an external control element, and transmits the control signal to the switch control unit 170. The control signal is a signal to select a broadcast, that is, a signal to select the terrestrial broadcast or cable broadcast in this exemplary embodiment.

The switch control unit 170 controls the air switch unit 120, the cable switch unit 140, and the tuner switch unit 150 based on whether or not power is supplied, and the control signal received from the control signal input unit 160.

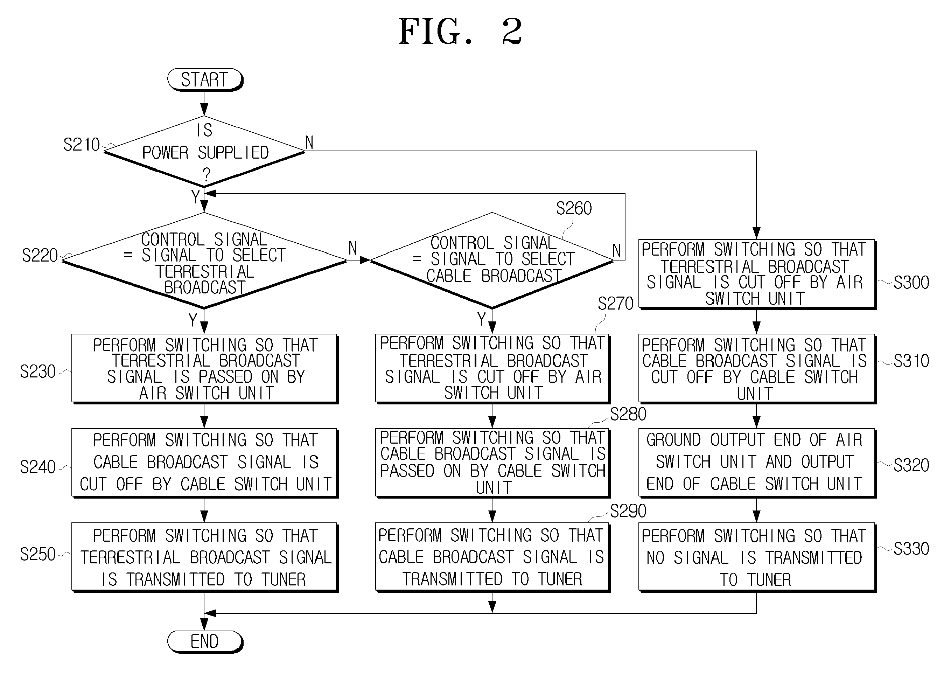

The process of the switch control unit 170 controlling each switch unit 120, 140, and 150 based on the presence or absence of the power supply, and the control signal is described in detail with reference to FIG. 2. FIG. 2 is a flow chart of a switch method performed by the switch apparatus of FIG. 1.

If power is supplied in operation S210-Y, and a control signal to select a terrestrial broadcast is input in operation S220-Y, the switch control unit 170 operates the air switch unit 120 to pass a terrestrial broadcast signal input by the air input unit 110 to the tuner switch unit 150 in operation S230.

In contrast, the switch control unit 170 operates the cable switch unit 140 to cut off a cable broadcast signal input by the cable input unit 130 to the tuner switch unit 150 in operation S240.

In addition, in operation S250, the switch control unit 170 operates the tuner switch unit 150 to transmit the terrestrial broadcast signal passing through the air switch unit 120 to the tuner. More specifically, the switch control unit 170 operates the tuner switch unit 150 to electrically connect an output end of the air switch unit 120 to an input end of the tuner. Subsequently, the tuner switch unit 150 performs switching to electrically disconnect an output end of the cable switch unit 140 from the input end of the tuner.

If power is supplied in operation S210-Y, and a control signal to select a cable broadcast is input in operation S260-Y, the switch control unit 170 operates the air switch unit 120 to cut off a terrestrial broadcast signal input by the air input unit 110 to the tuner switch unit 150 in operation S270.

In contrast, the switch control unit 170 operates the cable switch unit 140 to pass a cable broadcast signal input by the cable input unit 130 to the tuner switch unit 150 in operation S280.

In addition, in operation S290, the switch control unit 170 operates the tuner switch unit 150 to transmit the cable broadcast signal passing through the cable switch unit 140 to the tuner. More specifically, the switch control unit 170 operates the tuner switch unit 150 to electrically connect an output end of the cable switch unit 140 to an input end of the tuner. Subsequently, the tuner switch unit 150 performs switching to electrically disconnect an output end of the air switch unit 120 to the input end of the tuner.

If power is not supplied in operation S210-N, the switch control unit 170 operates the air switch unit 120 to cut off a terrestrial broadcast signal input by the air input unit 110 to the tuner switch unit 150 in operation S300.

In addition, the switch control unit 170 operates the cable switch unit 140 to cut off a cable broadcast signal input by the cable input unit 130 to the tuner switch unit 150 in operation S310.

Moreover, in operation S320, the switch control unit 170 makes the output end of the air switch unit 120 and the output of the cable switch unit 140 grounded. Accordingly, a terrestrial broadcast signal which may leak from the air switch unit 120, and a cable broadcast signal which may leak from the cable switch unit 140 are prevented from entering the tuner switch unit 150.

Furthermore, in operation S330, the switch control unit 170 operates the tuner switch unit 150 not to transmit any broadcast signals to the tuner. In more detail, the switch control unit 170 operates the tuner switch unit 150 to electrically disconnect the output end of the air switch unit 120 to the input end of the tuner, and to electrically disconnect the output end of the cable switch unit 140 to the input end of the tuner.

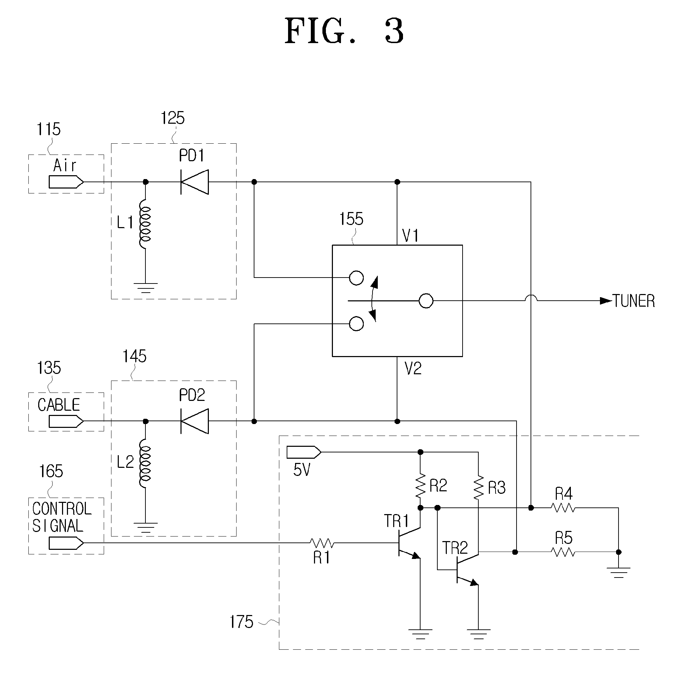

The circuit structure of the switch apparatus of FIG. 1 is described in detail with reference to FIG. 3, which is a circuit diagram of the switch apparatus of FIG. 1.

As shown in FIG. 3, the switch apparatus according to the exemplary embodiment of the present invention includes an air input unit 115, an air switch unit 125, a cable input unit 135, a cable switch unit 145, an RF switch IC 155, a control signal input unit 165, and a switch control unit 175.

The air switch unit 125 includes a first inductor L1, and a first positive intrinsic negative (PIN) diode PD1. One end of the first inductor L1 is connected to the air input unit 115 and a cathode end of the first PIN diode PD1 (that is, the n-type part of the first PIN diode PD1), and the other end of the first inductor L1 is grounded.

The cathode end of the first PIN diode PD1 is connected to the air input unit 115 and the one end of the first inductor L1, and the anode end of the first PIN diode PD1 (that is, the p-type part of the first PIN diode PD1) is connected to an input end of the RF switch IC 155, and the switch control unit 175.

The PIN diode is a diode having PIN junction. If the forward bias is applied to the diode, the diode is turned on, and if the reverse bias is applied to the diode, the diode is turned off.

A terrestrial broadcast signal input through the air input unit 115 is input to the cathode end of the first PIN diode PD1, and output to the anode end of the first PIN diode PD1. Accordingly, the cathode end of the first PIN diode PD1 may be referred to as the input end of the air switch unit 125, and the anode end of the first PIN diode PD 1 may be referred to as the output end of the air switch unit 125.

The cable switch unit 145 includes a second inductor L2, and a second PIN diode PD2. One end of the second inductor L2 is connected to the cable input unit 135 and a cathode end of the second PIN diode PD2, and the other end of the second inductor L2 is grounded.

The cathode end of the second PIN diode PD2 is connected to the cable input unit 135 and the one end of the second inductor L2, and the anode end of the second PIN diode PD2 is connected to the input end of the RF switch IC 155, and the switch control unit 175.

A cable broadcast signal input through the cable input unit 135 is input to the cathode end of the second PIN diode PD2, and output to the anode end of the second PIN diode PD2. Accordingly, the cathode end of the second PIN diode PD2 may be referred to as the input end of the cable switch unit 145, and the anode end of the second PIN diode PD2 may be referred to as the output end of the cable switch unit 145.

The RF switch IC 155 corresponds to the tuner switch unit 150 of FIG. 1, includes a plurality of transistors, and is a switch which is designed as an integrated circuit for switching RF signals.

The RF switch IC 155 includes two switch control signal input ends V1 and V2, and performs switching differently according to the logic level of the two input ends. More specifically, if the logic level of the first switch control signal input unit V1 is high, and the logic level of the second switch control signal input unit V2 is low, the RF switch IC 155 performs switching to electrically connect the output end of the air switch unit 125 to the input end of the tuner. If the logic level of the first switch control signal input unit V1 is low, and the logic level of the second switch control signal input unit V2 is high, the RF switch IC 155 performs switching to electrically connect the output end of the cable switch unit 145 to the input end of the tuner. If the logic level of the first switch control signal input unit V1 and the logic level of the second switch control signal input unit V2 are low, the RF switch IC 155 performs switching to electrically disconnect the output end of the air switch unit 125 from the input end of the tuner, and electrically disconnect the output end of the cable switch unit 145 from the input end of the tuner.

The switch control unit 175 includes a power supply unit at 5V, a first transistor TR1, a second transistor TR2, and resistances R1, R2, R3, R4 and R5.

The base end of the first transistor TR1 is connected to the control signal input unit 165 through the first resistance R1 to receive a control signal, and the collector end of the first transistor TR1 is connected to the base end of the second transistor TR2, the anode end of the first PIN diode PD1, and the first switch control signal input end V1 of the RF switch IC 155.

The collector end of the second transistor TR2 is connected to the anode end of the second PIN diode PD2, and the second switch control signal input end V2 of the RF switch IC 155.

One end of the fourth resistance R4 is connected to the output end of the air switch unit 125, and the other end of the fourth resistance R4 is grounded. One end of the fifth resistance R5 is connected to the output end of the cable switch unit 145, and the other end of the fifth resistance R5 is grounded.

The circuit operation of the switch apparatus of FIG. 3 is described in detail below.
1) When power is supplied, and a control signal to select a terrestrial broadcast is input (operations S210-Y, S220-Y, and S230 to S250 in FIG. 2)
   The control signal to select the terrestrial broadcast is a 0V signal. If a 0V signal is input to the control signal input unit 165, the first transistor TR1 is turned off, and the collector end of the first transistor TR1 have high logic level. Therefore, the logic level of the anode end of the first PIN diode PD1 directly connected to the collector end of the first transistor TR1 is raised, so the first PIN diode PD1 is turned on. As a result, a terrestrial broadcast signal input through the air input unit 115 passes through the air switch unit 125 to the RF switch IC 155.
   As the base end of the second transistor TR2 directly connected to the collector end of the first transistor TR1 has a high logic level, the second transistor TR2 is turned on, so the collector end of the second transistor TR2 has a low logic level. Therefore, the logic level of the anode end of the second PIN diode PD2 directly connected to the collector end of the second transistor TR2 is lowered, so the second PIN diode PD2 is turned off. As a result, a cable broadcast signal input through the cable input unit 135 is cut off in the second PIN diode PD2, and is grounded through the second inductor L2.
   The first switch control signal input end V1 of the RF switch IC 155 directly connected to the collector end of the first transistor TR1 has a high logic level, and the second switch control signal input end V2 of the RF switch IC 155 directly connected to the collector end of the second transistor TR2 has a low logic level. Accordingly, the RF switch IC 155 performs switching to electrically connect the output end of the air switch unit 125 to the input end of the tuner.
   Consequently, the terrestrial broadcast signal input through the air input unit 115 passes through the air switch unit 125 and the RF switch IC 155 to the tuner, but the cable broadcast signal input through the cable input unit 135 is cut off by the cable switch unit 145, and thus not transmitted to the tuner. The cable broadcast signal which is not cut off but leaked from the cable switch unit 145 is cut off by the RF switch IC 155 and is not transmitted to the tuner. Moreover, the cable broadcast signal is not transmitted back to the air input unit 115 through the air switch unit 125.
   In the above exemplary embodiment, in order to prevent the cable broadcast signal from being transmitted to the tuner or being transmitted back to the air input unit 115, a hybrid scheme using both the RF switch IC 155 and the air switch unit 125 is adopted.

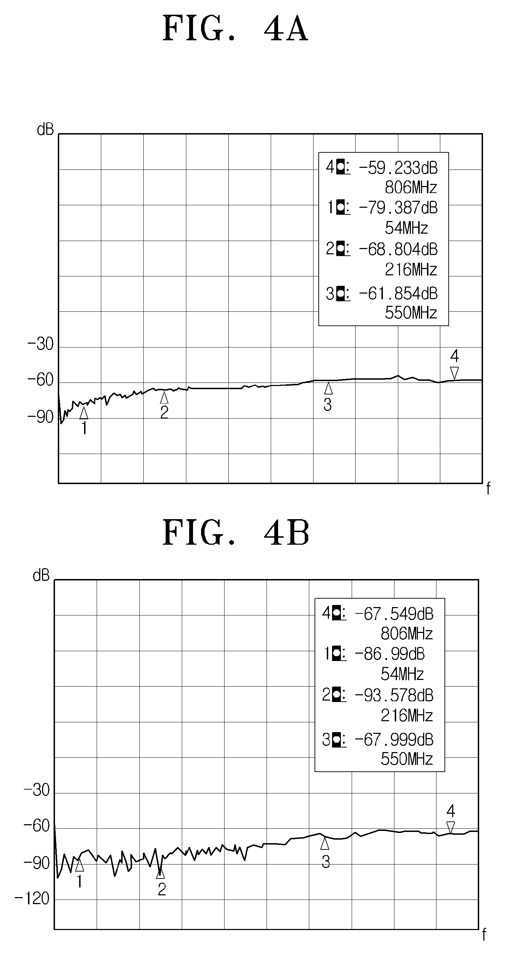

   FIG. 4A is a graph illustrating isolation when using only the RF switch IC 155, and FIG. 4B is a graph illustrating isolation when using the RF switch IC 155 together with the cable switch unit 145. The dB level of FIG. 4B is lower than that of FIG. 4A at any frequency level. This means that the isolation of FIG. 4B is superior to that of FIG. 4A.
2) When power is supplied, and a control signal to select a cable broadcast is input (operations S210-Y, S220-Y, S260-Y, and S270 to S290 in FIG. 2)
   The control signal to select the cable broadcast is 5V signal. If 5V signal is input to the control signal input unit 165, the first transistor TR1 is turned on, and the collector end of the first transistor TR1 has a low logic level. Therefore, the logic level of the anode end of the first PIN diode PD1 directly connected to the collector end of the first transistor TR1 is lowered, so the first PIN diode PD1 is turned off. As a result, a terrestrial broadcast signal input through the air input unit 115 is cut off in the first PIN diode PD1, and grounded through the first inductor L1.
   As the base end of the second transistor TR2 directly connected to the collector end of the first transistor TR1 has a low logic level, the second transistor TR2 is turned off, so the collector end of the second transistor TR2 has a high logic level. Therefore, the logic level of the anode end of the second PIN diode PD2 directly connected to the collector end of the second transistor TR2 is raised, so the second PIN diode PD2 is turned on. As a result, a cable broadcast signal input through the cable input unit 135 passes through the cable switch unit 145 to be transmitted to the RF switch IC 155.
   The first switch control signal input end V1 of the RF switch IC 155 directly connected to the collector end of the first transistor TR1 has a low logic level, and the second switch control signal input end V2 of the RF switch IC 155 directly connected to the collector end of the second transistor TR2 has a high logic level. Accordingly, the RF switch IC 155 performs switching to electrically connect the output end of the cable switch unit 145 to the input end of the tuner.
   Consequently, the cable broadcast signal input through the cable input unit 135 passes through the cable switch unit 145 and the RF switch IC 155 to the tuner, but the terrestrial broadcast signal input through the air input unit 115 is cut off by the air switch unit 125, and thus is not transmitted to the tuner. The terrestrial broadcast signal which is not cut off but leaked from the air switch unit 125 is cut off by the RF switch IC 155 and is not transmitted to the tuner. Moreover, the terrestrial broadcast signal is not transmitted back to the cable input unit 135 through the cable switch unit 145.
   In the above exemplary embodiment, in order to prevent the terrestrial broadcast signal from being transmitted to the tuner or being transmitted back to the cable input unit 135, a hybrid scheme using both the RF switch IC 155 and the air switch unit 125 is adopted.
   Isolation when using the RF switch IC 155 together with the air switch unit 125 is superior to isolation when using only the RF switch IC 155, as inferred with reference to FIGs. 4A and 4B, so detailed description is omitted.
3) When power is not supplied (operations S210-N, and S300 to S330 in FIG. 2)
   If power is not supplied, power is not supplied from the power supply unit 5V in the switch control unit, so the first transistor TR1 and the second transistor TR2 are not operated. Therefore, the anode end of the first PIN diode PD1 is grounded through the fourth resistance R4 and thus has a low logic level, so the first PIN diode PD1 is turned off.

As a result, a terrestrial broadcast signal input through the air input unit 115 is cut off by the air switch unit 125, and grounded through the first inductor L1. The terrestrial broadcast signal which is not cut off but leaked from the air switch unit 125 is grounded through the fourth resistance R4, and thus is not transmitted to the RF switch IC 155.

The anode end of the second PIN diode PD2 is grounded through the fifth resistance R5, and thus has a low logic level, so the second PIN diode PD2 is turned off.

As a result, a cable broadcast signal input through the cable input unit 135 is cut off in the cable switch unit 145, and is grounded through the second inductor L2. The cable broadcast signal which is not cut off but leaked from the cable switch unit 145 is grounded through the fifth resistance R5, and thus is not transmitted to the RF switch IC 155.

The first switch control signal input end V1 of the RF switch IC 155 grounded through the fourth resistance R4 has a low logic level, and the second switch control signal input end V2 of the RF switch IC 155 grounded through the fifth resistance R5 has a low logic level. Accordingly, the RF switch IC 155 performs switching to electrically disconnect the output end of the air switch unit 125 from the input end of the tuner, and electrically disconnect the output end of the cable switch unit 145 from the input end of the tuner.

Consequently, the terrestrial broadcast signal input through the air input unit 115 and the cable broadcast signal input through the cable input unit 135 are cut off. The terrestrial broadcast signal which is not cut off but leaked from the air switch unit 125 is cut off by the RF switch IC 155, and thus is not transmitted to the tuner, and not transmitted back to the cable input unit 135 through the cable switch unit 145. In addition, the cable broadcast signal which is not cut off but leaked from the cable switch unit 145 is cut off by the RF switch IC 155, and thus is not transmitted to the tuner, and not transmitted back to the air input unit 115 through the air switch unit 125.

In the above exemplary embodiment, in order to prevent the terrestrial broadcast signal from being transmitted to the tuner or being transmitted back to the cable input unit 135, a hybrid scheme using both the RF switch IC 155 and the air switch unit 125 is adopted, and also a method for grounding the air switch unit 125 using the fourth resistance R4 of which one end is grounded is adopted.

Furthermore, in order to prevent the cable broadcast signal from being transmitted to the tuner or being transmitted back to the air input unit 115, a hybrid scheme using both the RF switch IC 155 and the cable switch unit 145 is adopted, and also a method for grounding the cable switch unit 145 using the fifth resistance R5 of which one end is grounded is adopted.

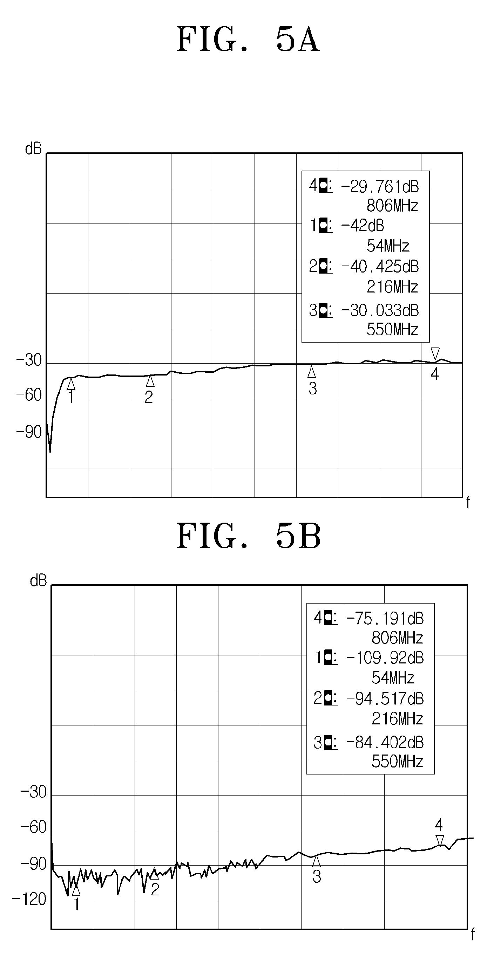

FIG. 5A is a graph illustrating isolation when using only the RF switch IC 155, and FIG. 5B is a graph illustrating isolation according to the exemplary embodiment of the present invention. The dB level of FIG. 5B is lower than that of FIG. 5A at any frequency level. This means that the isolation of FIG. 5B is superior to that of FIG. 5A.

A switch apparatus and method using a hybrid switching scheme have been described with reference to the exemplary embodiment.

The air and cable referred to in the exemplary embodiment are kinds of media through which broadcast signals may travel, but other media may also be used. That is, the technical idea of the present invention can be applied even when other kinds of broadcast signals except for a terrestrial broadcast signal and cable broadcast signal are received.

In addition, the first and second transistors TR1 and TR2 are implemented with metal-oxide semiconductor field effect transistors (MOSFET) in the exemplary embodiment, but the present invention is not limited to such transistors, and other kinds of transistors can also be used.

Furthermore, all the operations of the switching method shown in FIG. 2 do not have to be followed to implement the present invention, so some operations may be omitted. For example, at least one of operations S320 and S330 can be omitted.

In the exemplary embodiment, PIN diodes are applied as switch elements mounted in the air switch unit 125 and the cable switch unit 145, but this is merely an example to facilitate explanation of the present invention. Accordingly, the technical idea of the present invention can be applied even when diodes other than PIN diodes are used, or when switch elements other than diodes are used.

Moreover, the tuner switch unit 150 can be implemented with a switch element other than the RF switch IC.

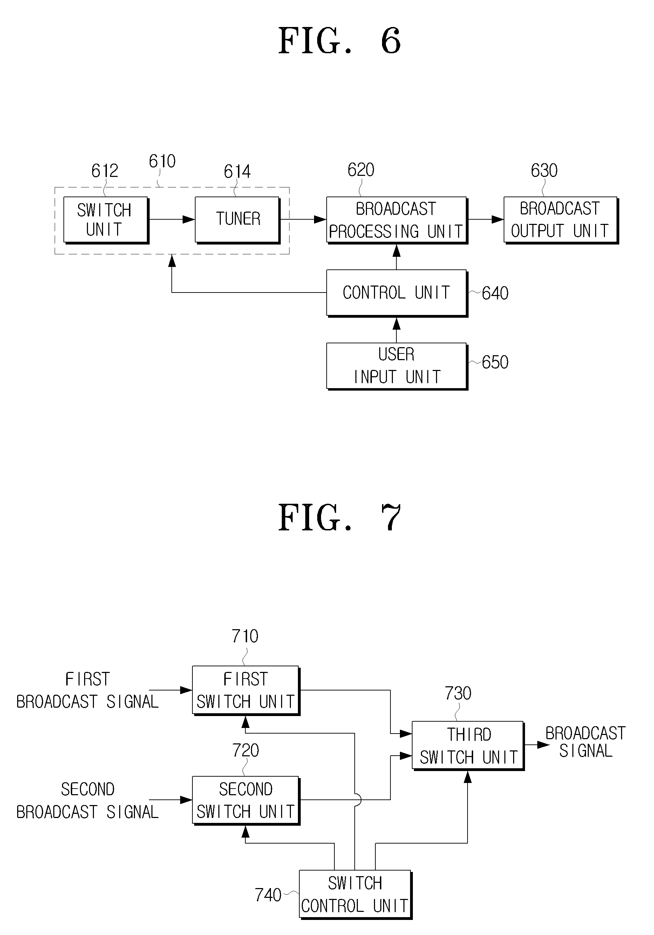

FIG. 6 is a block diagram of a broadcast receiving apparatus according to a second exemplary embodiment of the present invention. The broadcast receiving apparatus includes a broadcast receiving unit 610, a broadcast processing unit 620, a broadcast output unit 630, a control unit 640, and a user input unit 650.

The broadcast receiving unit 610 receives a broadcast signal through a broadcast medium, and includes a switch unit 612, and a tuner 614.

The switch unit 612 performs switching to selectively output one of diverse broadcast signals received through diverse broadcast media, and can be implemented with the switch apparatus which is described in the above exemplary embodiment.

The tuner 614 tunes to one of diverse channels included in the broadcast signal output from the switch unit 612.

The broadcast processing unit 620 performs signal processing such as decoding and scaling a broadcast signal of a channel selected by the tuner 614. The broadcast output unit 630 outputs the broadcast signal processed by the broadcast processing unit 620 via a display and a speaker.

The control unit 640 controls the overall operation of the broadcast receiving apparatus according to user commands received through the user input unit 650.

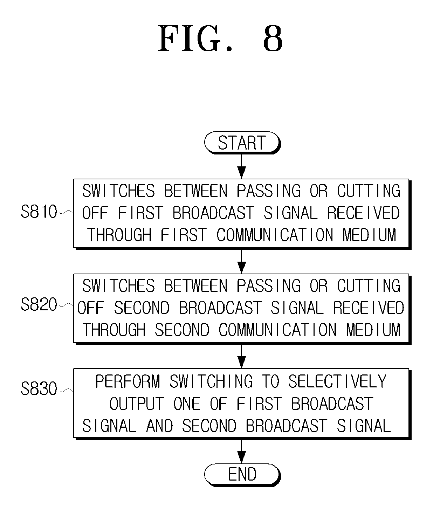

Another exemplary embodiment of the present invention is described with reference to FIGs. 7 and 8.

As shown in FIG. 7, a switch apparatus according to another exemplary embodiment of the present includes a first switch unit 710, a second switch unit 720, a third switch unit 730, and a switch control unit 740.

The first switch unit 710 switches between passing and cutting off a first broadcast signal received through a first communication medium. The second switch unit 720 switches between passing and cutting off a second broadcast signal received through a second communication medium.

The third switch unit 730 performs switching to selectively output one of the first broadcast signal passing through the first switch unit 710, and the second broadcast signal passing through the second switch unit 720.

The switch control unit 740 controls switching operation of the first, second and third switch units (710, 720, 730) according to an input control signal.

In the switching method shown in FIG. 8, firstly in operation S810, the switch apparatus switches between passing and cutting off a first broadcast signal received through a first communication medium. Subsequently, in operation S820, the switch apparatus switches between passing and cutting off a second broadcast signal received through a second communication medium. Finally, the switch apparatus performs switching to selectively output one of the first broadcast signal and the second broadcast signal which are passed in operation S830.

In this process, the switching operation can be performed using a hybrid scheme.

As can be appreciated from the above description, a plurality of switch elements are arranged on the path for transmitting a broadcast signal in a hybrid scheme, so the broadcast signal is efficiently prevented from being leaked twofold or threefold, and thus isolation increases. Since the switch apparatus according to the present invention is implemented using general switch elements, and not using mechanical switch elements or expensive switch elements, the volume and manufacturing costs of the switch apparatus are kept down.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A switch apparatus comprising:
a first switch unit (710) which switches between passing and cutting off a first broadcast signal;
a second switch unit (720) which switches between passing or cutting off a second broadcast signal;
a third switch unit (730) which performs switching to selectively output one of the first broadcast signal passed from the first switch unit (710) and the second broadcast signal passed from the second switch unit (720); and
a switch control unit (740) which controls the switching operation of the first switch unit (710), the second switch unit (720), and the third switch unit (730) according to an input control signal.

2. The switch apparatus of claim 1, wherein the first broadcast signal is received through a first communication medium and the second broadcast signal is received through a second communication medium.

3. The switch apparatus of claim 1 or 2, wherein if the control signal is a signal to select the first broadcast signal, the switch control unit (740) operates the first switch unit (710) and the third switch unit (730) to output the first broadcast signal, and operates the second switch unit (720) to cut off the second broadcast signal, and
if the control signal is a signal to select the second broadcast signal, the switch control unit (740) operates the second switch unit (720) and the third switch unit (730) to output the second broadcast signal, and operates the first switch unit (710) to cut off the first broadcast signal.

4. The switch apparatus of any preceding claim, wherein if power is not supplied, the switch control unit (740) operates the first switch unit (710) to cut off the first broadcast signal, and operates the second switch unit (720) to cut off the second broadcast signal.

5. The switch apparatus of claim 4, wherein the first switch unit (710) grounds the cut-off first broadcast signal, and the second switch unit (720) grounds the cut-off second broadcast signal.

6. The switch apparatus of any one of claims 1-3, wherein if power is not supplied, the switch control unit (740) grounds an output end of the first switch unit (710), and grounds an output end of the second switch unit (720).

7. The switch apparatus of any preceding claim, wherein if power is not supplied, the switch control unit (740) operates the third switch unit (730) to perform switching to cut off the first broadcast signal and the second broadcast signal.

8. The switch apparatus of any preceding claim, wherein the first switch unit comprises a first diode (PD1) which switches between passing and cutting off the first broadcast signal, and
the second switch unit comprises a second diode (PD2) which switches between passing and cutting off the second broadcast signal.

9. The switch apparatus of claim 8, wherein the first broadcast signal is input to a cathode end (n-type part) of the first diode (PD1), and
the second broadcast signal is input to a cathode end (n-type part) of the second diode (PD2).

10. The switch apparatus of claim 8, wherein the first diode (PD1) and the second diode (PD2) are positive intrinsic negative (PIN) diodes.

11. The switch apparatus of any preceding claim, wherein the third switch unit (720) comprises a radio frequency (RF) switch integrated circuit (IC) (155).

12. The switch apparatus of any preceding claim, wherein the first communication medium is air, and the second communication medium is a cable.

13. A switching method comprising:
switching between passing and cutting off a first broadcast signal (S810);
switching between passing and cutting off a second broadcast signal (S820); and
switching to selectively output one of the first broadcast signal and the second broadcast signal (S830).

14. The switch method of claim 13, wherein the first broadcast signal is received through a first communication medium and the second broadcast signal is received through a second communication medium.

15. The switch method of claim 13 or 14, wherein the switching to selectively output one of the first broadcast signal and the second broadcast signal comprises:
controlling a first switch unit and a third switch unit to output the first broadcast signal, if the first broadcast signal is selected (S220-S250); and
controlling a second switch unit and the third switch unit to output the second broadcast signal, if the second broadcast signal is selected (S260-S290), wherein the first switch switches between passing and cutting off a first broadcast signal and the second switch switches between passing and cutting off a second broadcast signal.

16. The switch method of claim 13, 14 or 15 further comprises controlling a first switch unit to cut off the first broadcast signal and controlling a second switch unit to cut off the second broadcast signal (S300-S330).

17. The switch method of claim 16, further comprises grounding the cut off first broadcast signal and grounding the cut off second broadcast signal.

18. A broadcast receiving apparatus comprising:
a switch unit (612) which performs switching to selectively output one of a plurality of broadcast signals received through a plurality of broadcast media;
a tuner (614) which tunes to one of a plurality of channels included in the broadcast signal output from the switch unit;
a broadcast processing unit (620) which processes the channel tuned by the tuner; and
a broadcast output unit (630) which outputs the channel processed by the broadcast processing unit,
wherein the switch unit comprises:
a first switch unit (710) which switches between passing or cutting off a first broadcast signal received through a first communication medium;
a second switch unit (720) which switches between passing or cutting off a second broadcast signal received through a second communication medium;
a third switch unit (730) which performs switching to selectively output one of the first broadcast signal passing through the first switch unit (710) and the second broadcast signal passing through the second switch unit (720); and
a switch control unit (740) which controls the switching operation of the first switch unit (710), the second switch unit (720), and the third switch unit (730) according to an input control signal.
